Europäisches Patentamt

European Patent Office

Office européen des brevets

(19)

(11) Veröffentlichungsnummer : **0 570 722 B1**

# (12) EUROPÄISCHE PATENTSCHRIFT

(45) Veröffentlichungstag der Patentschrift :
**19.07.95 Patentblatt 95/29**

(51) Int. Cl.⁶ : **H04N 1/46**

(21) Anmeldenummer : **93106690.6**

(22) Anmeldetag : **24.04.93**

(54) **Verfahren zur elektronischen Verarbeitung mehrfarbiger Halbton-Bildvorlagen.**

(30) Priorität : **22.05.92 DE 4216932**

(43) Veröffentlichungstag der Anmeldung :
**24.11.93 Patentblatt 93/47**

(45) Bekanntmachung des Hinweises auf die
Patenterteilung :
**19.07.95 Patentblatt 95/29**

(84) Benannte Vertragsstaaten :
**DE FR GB**

(56) Entgegenhaltungen :
**EP-A- 0 126 782**
**EP-A- 0 170 136**
**EP-A- 0 370 271**
**EP-A- 0 444 290**
**DE-A- 4 133 474**
**US-A- 1 742 543**
**US-A- 4 974 067**

(73) Patentinhaber : **von Kienlin, Albrecht Dr.**
**Am Taunusblick 7**
**D-65824 Schwalbach (DE)**

(72) Erfinder : **von Kienlin, Albrecht, Dr. (Phys.)**
**Am Taunusblick 7**
**W-6231 Schwalbach (DE)**
Erfinder : **Urban, Peter, Dipl.-Ing.**
**Am Sportplatz 7**
**W-6946 Gorxheimertal (DE)**

(74) Vertreter : **Keil, Rainer A., Dipl.-Phys. Dr. et al**
**KEIL & SCHAAFHAUSEN**
**Patentanwälte**
**Eysseneckstrasse 31**
**D-60322 Frankfurt am Main (DE)**

## Beschreibung

Die Erfindung betrifft ein Verfahren nach dem Oberbegriff des Anspruchs 1.

Unter "Schreibpunkten" wird jede Art der graphischen Punktdarstellung verstanden, wobei der Begriff "Punkt" nicht im Sinne eines geometrischen Punktes zu verstehen ist, sondern ein Flächenelement geringer Größe darstellt.

Mit einem derartigen Verfahren können mehrfarbige Halbton-Bildvorlagen auf einem Aufzeichnungsmedium, beispielsweise einem Blatt Papier, einer Druckplatte oder einem Film durch einzelne, gleich große Aufzeichnungselemente, die entweder ganzflächig eingefärbt oder ganzflächig nicht eingefärbt sind, wiedergegeben werden. Die Bildinformation der Halbton-Bildvorlage wird zunächst durch eine Sensor- bzw. Abtastvorrichtung, wie z.B. einen Scanner, aufgenommen. Dazu wird die Halbton-Bildvorlage z.B. zeilenweise, Abtastelement für Abtastelement, mit einem Lichtstrahl abgetastet. Der Scanner gibt für jedes Abtastelement ein analoges Spannungssignal aus, das der Helligkeit des im Auf- oder Durchlicht beleuchteten Abtastelements entspricht. Bei farbigen Vorlagen wird der Lichtstrahl über Filter in drei Farben (rot, grün, blau) zerlegt und deren jeweilige Helligkeiten werden ermittelt. Häufig wird zum Zweck der lokalen Kontrasterhöhung (sog. Detailkontrast) zusätzlich auch das Umfeld des Abtastelements erfaßt. Die erhaltenen analogen Spannungssignale werden über Anlog-Digital-Wandler in digitale Tonwerte von beispielsweise 256 (= $2^8$) Tonwertstufen (0 - 255) unterteilt, so daß sie als 8-bit-Datenblöcke verarbeitet werden können.

Die Aufzeichnung von Halbton-Bildvorlagen, bei denen die Tonwerte zwischen einem minimalen und einem maximalen Wert liegen, erfolgt in Form von gerasterten Abbildern, bei denen Schreibpunkte mit maximalem Tonwert auf das Aufzeichnungsmedium aufgebracht werden. Der für eine bestimmte Stelle der Halbton-Bildvorlage ermittelte Tonwert wird dadurch simuliert, daß an der entsprechenden Stelle des gerasterten Abbildes eine Anzahl von Schreibpunkten gesetzt wird, die zu einem dem Tonwert entsprechenden Flächendeckungsgrad führt. Ein oder mehrere Schreibpunkte können zu einem Rasterpunkt zusammengefaßt sein, so daß z. B. in den einzelnen aus Aufzeichnungselementen bestehenden Aufzeichnungsfeldern, in welche das Abbild unterteilt ist, je ein Rasterpunkt aus einer mehr oder weniger großen Anzahl von Schreibpunkten besteht. Damit ist es möglich, die Bildvorlage mit zahlreichen diskreten Schreibpunkten, d. h. quasi-kontinuierlich, wiederzugeben.

Bei konventionellen Rasterverfahren wird zur Wiedergabe des Tonwertes an einer Stelle der Bildvorlage eine dem Flächendeckungsgrad entsprechende Anzahl von Schreibpunkten zu einem einzigen Rasterpunkt zusammengefaßt, welcher in das Zentrum des Aufzeichnungsfeldes gesetzt wird. Beim Übereinanderdruck mehrerer Farbauszüge ist der Farbeindruck davon abhängig, inwieweit sich die Rasterpunkte der einzelnen Farbauszüge überdecken. Bereits geringfügige, montagebedingte Verschiebungen der Farbauszüge gegeneinander (sog. Passerschwankungen) können zu Farbänderungen führen. Diesem Störeffekt wird beim konventionellen Raster dadurch entgegengewirkt, daß man die Raster der einzelnen Farbauszüge gegeneinander verwinkelt. Dabei tritt jedoch das Problem der Bildung von Rosetten und anderem Moiré auf und die Zahl der möglichen Farbauszüge wird begrenzt. Hierdurch wird zusammen mit anderen Störeffekten wie Punktschluß und Tonwertabrissen die Qualität des Abbildes beeinträchtigt. Zusätzlich kann es zu Aufzeichnungsmoiré kommen, wenn es in einem Farbauszug zu Interferenzen zwischen dem Raster und regelmäßigen Vorlagenstrukturen kommt.

Aus der DE-A-41 33 474 ist ein elektronisches Rasterverfahren bekannt, bei dem zur Vermeidung von Störeffekten die Raster der einzelnen Farbauszüge gegeneinander verwinkelt werden. Die durch Abtasten des Originals vorgegebenen Tonwerte werden durch Setzen von Punkten variabler Größe innerhalb einer Dither-Matrix simuliert (amplitudenmodulierter Raster). Die Eingabebilddaten werden in Blöcke (Kacheln) mit einer vorbestimmten Zahl, z.B. 2 x 2, von Pixeln (Abtastelementen) zusammengefaßt. Die Positionen der abtastseitigen Pixel entsprechen den Positionen der aufzuzeichnenden Pixel (Aufzeichnungselemente). Die Anordnung der Pixel in den 2 x 2 Blöcken ist für alle Kacheln identisch. Die Verknüpfung der abtastseitig vorgegebenen Tönungspegel mit der Zahl und Größe der aufzeichnungsseitig innerhalb der Blöcke gesetzten Bildpunkte erfolgt aufgrund von sogenannten Tönungswandler-Charakteristiken, die je nach der Position der Pixel verschieden sind. Aufgrund der verschiedenen Tönungswandler-Charakteristiken können Position und Fläche der Bildpunkte innerhalb der Blöcke flexibel gesteuert werden. Verschiedene Tönungswandler-Charakteristiken sollen für verschiedene Gegebenheiten bei den Ausgabegeräten und bei der geforderten Wiedergabequalität vorteilhaft sein. Außerdem soll die gewünschte Winklung der Bildpunkte bei der Ausgabe von Farbbildern dadurch erreicht werden, daß jeweils 2 x 2 Blöcke mit 2 x 2 Pixeln zu einem Block von 4 x 4 Pixeln zusammengefaßt werden. Die Bildpunkte innerhalb der 4 x 4 Blöcke sollen selektiv wachsen. Dazu werden die in den 4 x 4 Blöcken befindlichen Pixel in zwei Gruppen von jeweils 8 Pixeln eingeteilt, wobei die Pixel der ersten Gruppe vor den Pixeln der zweiten Gruppe zum Wachsen gebracht werden. Das gewünschte vorrangige Wachstum der Pixel, die sich auf prioritären Positionen befinden bzw. das nachgeordnete Wachstum der zweiten Pixel-Gruppe wird durch geeignete Auswahl der Tönungswandler-Charakteristiken für die einzelnen Pixel-Positionen realisiert. Eine Winklung der Punkte innerhalb der 4 x 4 Blöcke kann durch Auswahl geeigneter Positionen für die prioritär wachsenden Pixel erzielt werden. Dabei werden Muster mit unterschiedlicher Winklung für die 4 Farben Yellow, Magenta, Cyan und Schwarz festgelegt.

Als Alternative zu den Verfahren mit gegeneinander verwinkelten Farbauszügen wurde eine Reihe von Rasterverfahren mit stochastischer Punktverteilung entwickelt (vgl. z.B. V. Humbel "Frequenzmodulierte Rasterverfahren und ihre Eignung für niedrig auflösende Wiedergabesysteme", Bericht 89/1 , EMPA , UGRA, St. Gallen, Dezember 1990), bei denen die zu setzenden Schreibpunkte nicht im Zentrum des Aufzeichnungsfeldes zusammengefaßt, sondern mehr oder weniger willkürlich (zufällig) über das gesamte Aufzeichnungsfeld verteilt werden. Es hat sich jedoch gezeigt, daß bei stochastischer Punktverteilung eine gewisse Körnigkeit und Unruhe im gerasterten Abbild entsteht, die insbesondere im Mittelton-Bereich auftritt, wenn es - unregelmäßig verteilt - an vielen Stellen zu einem Punktschluß zwischen mehreren Punkten kommt. Außerdem können als Folge des zufälligen Setzens der Schreibpunkte auch in Gebieten mit gleichem Tonwert Anhäufungen von Punkten und Gebiete mit unterdurchschnittlicher Punktzahl auftreten und zu dunkleren Stellen bzw. Aufhellungen führen (Flecken- und Wolkenbildung).

Aufgabe der Erfindung ist es, ein Verfahren der eingangs genannten Art derart auszugestalten, daß bei Vermeidung von Störeffekten durch Passerschwankungen, Interferenzen, Tonwertabrissen und Punktschluß sowie durch Körnigkeit, Unruhe, Flecken- und Wolkenbildung eine realitätsnahe Wiedergabe der Bildvorlage bei geringem Rechenaufwand erreichbar ist.

Diese Aufgabe wird mit der Erfindung durch die Merkmale des Anspruchs 1 gelöst.

Der durch das erfindungsgemäße Verfahren erzielte technische Fortschritt beruht auf einer neuartigen Verknüpfung von Auswahlkriterien hinsichtlich der Punktmuster, Punktmuster-Kombinationen und der Verfahrensschritte bei der Rasterung.

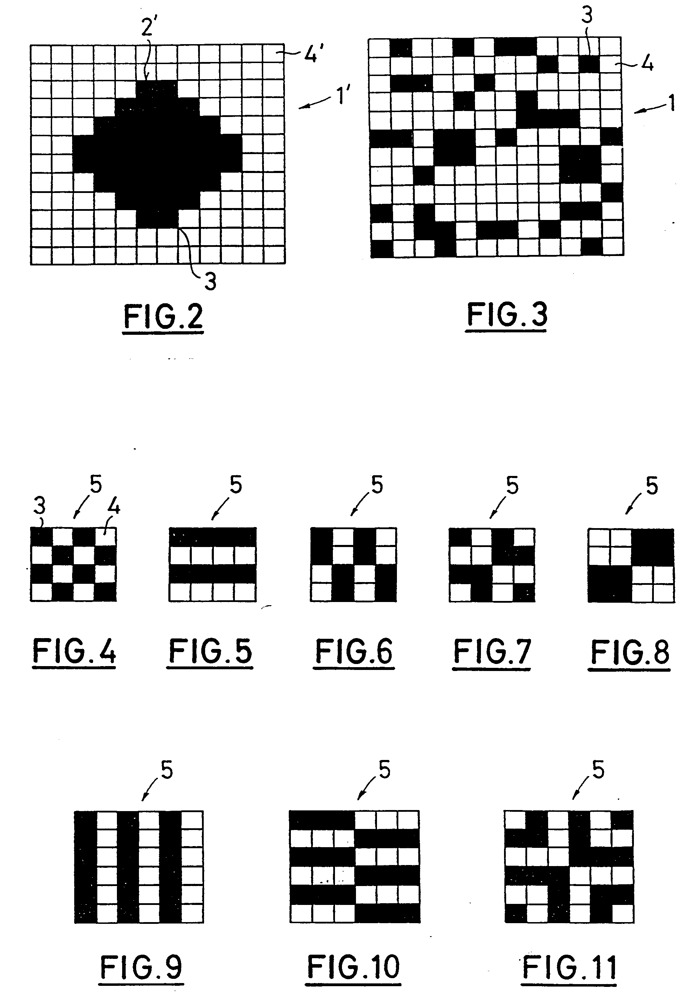

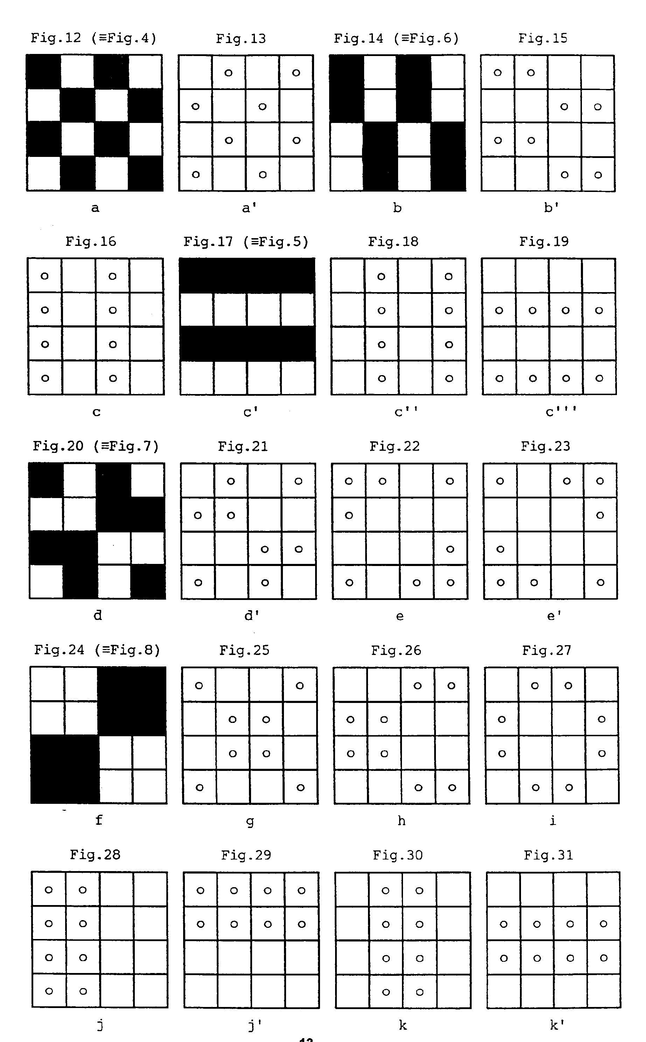

Ein bekanntes Kriterium für die Auswahl geeigneter Punktverteilungen besteht darin, daß zur Erzielung eines ruhigen Bildeindrucks niederfrequente Punktmuster zu vermeiden sind (vgl. Tokunaga et al. in IEEE Transactions on Electron Devices, Vol. ED-30, No. B, August 1983, S. 898 bis 904) bzw. die Schreibpunkte gleichmäßig verteilt sein sollen (vgl. Stoffel et al. in IEEE Transaction on Communications, Vol. COM-29, No. 12, Dec. 1981 , S. 1898 bis 1925 und DE-A-4 025 793) Dieses Kriterium ist besonders gut beim Schachbrettmuster berücksichtigt, bei welchem sich die Aufzeichnungselemente bis 50% Flächendeckung nur über ein Eck berühren (vgl. z.B. Stoffel et al., a.a.O., Fig. 30; DE-C-3 409 770, Fig. 4/7 und US-A-5 107 331, Fig. 8).

Erfindungsgemäß wird von einer das Kriterium "möglichst gleichmäßige Punktverteilung" erfüllenden Punktverteilung für die Flächendeckung 50 % ("Grundpunktmuster") ausgegangen.

Das Ausgehen der Erstellung der bestimmten Punktmuster für die einzelnen Tonwertstufen von Grundpunktmustern für die Flächendeckung 50 % erfolgt, weil sich Passerschwankungen bei paarweiser Kombination von Farbauszügen besonders stark auswirken, wenn beide Farbauszüge eine Flächendeckung von 50 % haben.

Um die Störeffekte durch Passerschwankungen gering zu halten, wird gemäß Anspruch 1 vorgeschlagen, daß die für die Flächendeckung von 50 % verwendeten Grundpunktmuster von Farbauszug zu Farbauszug dadurch verschieden voneinander sind, daß sie einer speziellen Überlappungsvorschrift in Verbindung mit einem Translationsverbot entsprechen.

Mit der Erfindung wird ferner vorgeschlagen, unterschiedliche Grundpunktmuster zu verwenden, welche durch Drehung um 90, durch Vergrößerung von Teilkacheln, Verschiebung von Teilkacheln oder Spiegelung von Teilkacheln auseinander entstehen.

Damit werden Kriterien aufgestellt, die sicherstellen, daß die Grundpunktmuster für die einzelnen Farbauszüge möglichst verschieden sind. Durch Passerschwankungen bedingte Störeffekte werden gering gehalten. Durch obige Kriterien für möglichst verschiedene Grundpunktmuster unterscheidet sich die Erfindung grundlegend von anderen Rasterverfahren, bei denen für verschiedene Farbauszüge unterschiedliche Punktmuster verwendet werden.

Bei dem in der US-A-4 884 080 beschriebenen Verfahren wird durch zweimal wiederholte Translation eines Punktmusters für 3x3-Kacheln um ein Aufzeichnungselement und wiederholte Aneinanderreihung der drei so erzeugten Kacheln eine Verwinklung zwischen einzelnen Farbauszügen erreicht. Die Grundpunktmuster innerhalb der 3x3-Kachel unterscheiden sich somit bei den einzelnen Farbauszügen - von der Translation abgesehen nicht. Bei einem anderen Verfahren (US-A-5 107 331) liegt allen Farbauszügen ein Schachbrettmuster zugrunde, das bei den einzelnen Farbauszügen gegeneinander verschoben ist. Hierdurch läßt sich jedoch das Problem der Passerschwankungen ersichtlich nicht beheben. Diese führen nämlich dazu, daß die einzelnen Muster wieder mehr oder weniger ineinander geschoben werden.

Bei den in der EP-A-0 370 271 und EP-A-0 417 806 beschriebenen Verfahren, die sich ähnlich sind, werden von einem oder mehreren Punkten innerhalb einer Kachel ausgehend, linienförmige Elemente aufgebaut, die mit zunehmendem Tonwert sowohl der Länge als auch der Breite nach wachsen, wobei für jeden Farbauszug die Richtung der Linienelemente verschieden ist. Dies läßt sich nur mit relativ großen Kacheln realisieren (z.B. Fig. 7: 20x20), bei welchen die Detailauflösung unbefriedigend ist und die Linien einzeln oder in speziellen Kombinationen als Schraffur oder als Rosetten für das Auge erkennbar sein können.

Das Kriterium möglichst verschiedener Grundpunktmuster soll bei einer weiteren Ausgestaltung der Erfindung auch dann berücksichtigt werden, wenn - zur Realisierung der Flächendeckungsstufen von mehr oder weniger als 50 % - Schreibpunkte zu den Grundpunktmustern hinzugefügt oder von ihnen weggenommen werden.

Einer Tonwertstufe eines Farbauszuges können mehrere Varianten von Mustern zugeordnet werden, die jeweils auf der Basis verschiedener Grundpunktmuster festgelegt wurden. Die jeweils zugrundeliegenden Grundpunktmuster können in vorgegebener Reihenfolge oder durch Zufallsauswahl aus den mehreren möglichen Punktverteilungen bestimmt werden. Durch die Zufallsauswahl kann die Gefahr von Interferenzen und vom Auge wahrnehmbarer regelmäßiger bildfremder Strukturen zusätzlich verringert werden.

Aus der EP-A-0 126 782 ist ein Verfahren bekannt, bei dem, um Moiré zu vermeiden, bestimmten Grauwerten ein Vorrat von Kacheln unterschiedlicher Größe, die unterschiedliche Punktmuster enthalten, zugeordnet ist. Die Punktmuster unterscheiden sich durch ihre Anordnung und dadurch, daß sie Punkte unterschiedlicher Größe enthalten. Durch die Variation sowohl der Anzahl der einzelnen Bildpunkte einer Kachel und/oder ihrer Lage und/oder ihrer Anhäufung und/oder ihrer Größe werden eine hohe Anzahl von in ihrem Grauwert zueinander äquivalenten Kacheln dargestellt. Die für jeden Grauton vorhandenen zahlreichen äquivalenten Kacheln erlauben die Auswahl der jeweils für den Druck günstigen Punktgröße über einen Microcode.

Vorzugsweise verwendet man bei der Ausführung des erfindungsgemäßen Verfahrens Kacheln mit 4 x 4 Aufzeichnungselementen, da für Kacheln dieser Größe bereits eine ausreichende Vielfalt von Grundpunktmustern realisiert werden können, die den genannten Kriterien entsprechen und da das Detail-Auflösungsvermögen bei dieser Kachelgröße noch gut ist.

Je nach Größe der Kacheln kann durch Variieren der Zahl der darin enthaltenen Schreibpunkte eine begrenzte Zahl von Flächendeckungsstufen verwirklicht werden. Die Zahl der abtastseitig z. B. bei 8 bit maximal differenzierbaren 256 Tonwertstufen ist somit größer als die Zahl der bei kleinen Kacheln vorhandenen Flächendeckungsstufen. Entspricht die Tonwertstufe nicht zufällig einer in der Kachel darstellbaren Flächendeckungsstufe, so wird an diesem Ort das Bild nicht korrekt wiedergegeben. Deswegen ist bei einer bevorzugten Weiterbildung der Erfindung vorgesehen, daß der durch Verwendung einer den jeweiligen Tonwert möglichst, aber meistens nicht ganz genau wiedergebenden Kachel entstehende Fehler bei der Bearbeitung anderer Kacheln berücksichtigt wird.

Aus der EP-A-0 444 290 ist ein Verfahren bekannt, das eine Kombination des sog. "Ordered Dithering" mit der "Error Diffusion" darstellt. Von Nachteil ist beim "Ordered Dithering", daß bildfremde Strukturen auftreten können.

Weiterbildungen, Vorteile und Anwendungsmöglichkeiten der vorliegenden Erfindung ergeben sich aus der nachfolgenden Beschreibung eines Ausführungsbeispieles und der Zeichnung.

Es zeigen:

| | |
|---|---|
| Fig. 1 | ein Blockschaltbild einer elektronischen Farbbild-Verarbeitung nach dem erfindungsgemäßen Verfahren, |
| Fig. 2 | einen nach einem herkömmlichen Verfahren in ein Aufzeichnungsfeld gesetzten Rasterpunkt, |
| Fig. 3 | eine nach einem stochastischen Verfahren erhaltene Verteilung von Schreibpunkten in einem Aufzeichnungsfeld, wobei die erfindungsgemäße Aufteilung in Kacheln angedeutet ist, |
| Fig. 4 bis 11 | Beispiele für regelmäßige Grundpunktmuster für eine Flächendeckung von 50 % für 4 x 4-Kacheln (Fig. 4 bis 8) bzw. 6 x 6-Kacheln (Fig. 9 bis 11) |
| Fig. 12 bis 47 | weitere Beispiele für nach der Erfindung einzusetzende Grundpunktmuster für 4x4-Kacheln (Fig. 12 bis 43) bzw. Zusammenstellungen von Kacheln (Fig. 44 bis 47), und |
| Fig. 48 | eine LOOK UP TABLE, die beispielhaft die Zuordnung von Kacheln und Fehlern zu den abgetasteten Bildwerten zeigt. |

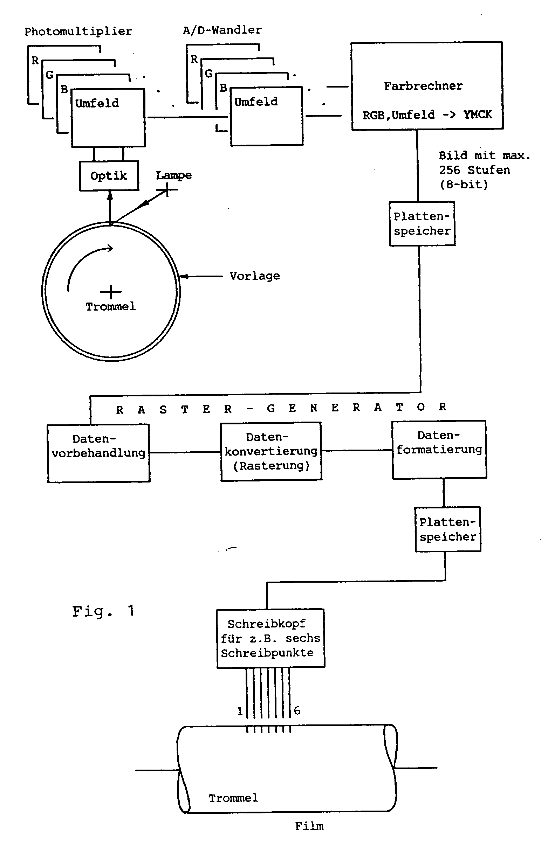

Aus dem in Fig. 1 dargestellten Blockschaltbild läßt sich der Verfahrensablauf bei der elektronischen Verarbeitung von Halbton-Bildvorlagen erkennen. Die Bildvorlage wird bspw. mit einem Trommelscanner zeilenweise abgetastet, wobei jede Zeile in gleichgroße flächenförmige Abtastelemente unterteilt wird. Das dem Abtastvorgang zugrundeliegende Schema von Zeilen und Spalten nennt man "Raster".

Bei mehrfarbigen Bildvorlagen wird der der Farbtönung des abgetasteten Abtastelements entsprechende Lichtstrahl über Filter in drei Farbanteile (R-rot, G-grün, B-blau) zerlegt. Außerdem wird das Umfeld des abgetasteten Abtastelements erfaßt und mit den drei Farben auf vier Photomultiplier geleitet. Die an den Photomultipliern abgenommenen analogen Spannungssignale, die den auf die drei Farben bzw. das Umfeld bezogenen Helligkeiten der Halbton-Bildvorlage entsprechen, werden über Analog-Digital-Wandler in 256 Tonwertstufen (Tonwerte 0 bis 255) unterteilt. Damit sind sie mit 8-bit diskret erfaßbar.

In einem Farbrechner werden die R/G/B-Werte in Werte für die Druckfarben (Y-yellow, M-magenta, C-cyan) umgerechnet. Ferner werden zur Erhöhung des Kontrastumfanges im Druck (sog. Tiefe) Tonwertanteile, welche in der Reproduktion zusammen grau ergeben zu einem gewissen Anteil Zusammengefaßt, als eigener Auszug (der sogenannte K-Wert) gespeichert und genauso wie die anderen Farbauszüge weiterverarbeitet. Außerdem wird eine eventuell gewünschte Farb-Anpassung eingerechnet. Die so erstellten Bilddaten werden bspw. in einem Plattenspeicher zwischengespeichert.

An den Plattenspeicher schließt sich gemäß Fig. 1 ein auf das erfindungsgemäße Verfahren zugeschnittener Rastergenerator an. Zunächst erfolgt eine Datenvorbehandlung bei der u.a. die Relation zwischen dem Tonwert und der Zahl der gesetzten Punkte (Gradationskurve) entsprechend den Vorgaben für die Reproduktion, d.h. unter Einbeziehung von Wünschen bezüglich Farben, Lichtern und Tiefen, variiert wird.

Bei der Datenvorbehandlung erfolgt auch die Anpassung der Daten an das vorgegebene Verhältnis der Größe der Abtastelemente zu der Größe der Aufzeichnungselemente.

Als nächstes werden die Halbton-Bilddaten in Raster-Bilddaten konvertiert.

An die Datenkonvertierung zur Erstellung eines gerasterten Abbildes kann sich nach Bedarf eine Datenformatierung anschließen, in welcher die Bildlage, die Belichtung sowie das Datenformat festgelegt werden, bevor die Wiedergabe oder Archivierung des gerasterten Bildes erfolgt.

In Halbton-Bildvorlagen ändern sich die Helligkeiten kontinuierlich zwischen einem minimalen und maximalen Wert, während die gerasterten Abbilder aus Schreibpunkten mit maximalem Tonwert und nicht beschriebenen Stellen, die den (minimalen) Tonwert des Aufzeichnungsmediums aufweisen, aufgebaut sind.

Dabei wird der für ein bestimmtes Abtastelement der Halbton-Bildvorlage ermittelte Tonwert dadurch simuliert, daß an der entsprechenden Stelle des gerasterten Bildes eine Anzahl von Schreibpunkten gesetzt wird, die zu einer dem Tonwert des Abtastelements entsprechenden prozentualen Flächendeckung führt. Die Rasterbilddaten werden über eine Schreib- oder Belichtungseinrichtung, bpsw. einem Schreibkopf mit Laserstrahl oder dgl. für einen oder mehrere Schreibpunkte, bei dem in Fig. 1 dargestellten Beispiel 6 Schreibpunkte, auf das Aufzeichnungsmedium, bspw. einem Blatt Papier, einer Druckplatte oder einem Film, aufgebracht.

In Fig. 2 ist ein Rasterfeld 1′ dargestellt, in welches nach einem konventionellen Rasterverfahren ein einziger Rasterpunkt 2′ mit einer dem Tonwert des zugeordneten Abtastelements der Bildvorlage entsprechenden Prozentualen Flächendeckung gesetzt wurde. Zum Aufbau eines derartigen Rasterpunktes 2′ enthält das Rasterfeld 1′ eine bestimmte Anzahl von Aufzeichnungselementen 4′ (hier 12 x 12 = 144 quadratische Aufzeichnungselemente 4′). Im vorliegenden Fall wird eine der prozentualen Flächendeckung entsprechende Anzahl von Schreibpunkten 3′, welche jeweils in in dem Rasterfeld 1′ vorgesehene Aufzeichnungselemente 4′ gesetzt sind, zu dem einzigen Rasterpunkt 2′ in dem Rasterfeld 1′ zusammengefaßt und zwar im Zentrum des Rasterfeldes 1′. Bei den konventionellen Rasterverfahren werden in den meisten Fällen zwischen ca. 30 und 60 Rasterpunkte 2′ pro Zentimeter gesetzt. Die dabei erzielte Auflösung läßt in vielen Fällen zu wünschen übrig. Ferner können sich bei diesen Verfahren im Übereinanderdruck mehrerer Farbauszüge Rosetten und anderes Moiré bilden, die zusammen mit anderen Störeffekten, wie Punktschluß und Tonwertabrissen, die Qualität des Abbildes erheblich mindern.

Bei dem in Fig. 3 dargestellten Rasterfeld 1 sind die Schreibpunkte 3 nach einem stochastischen Verfahren willkürlich auf die Aufzeichnungselemente 4 des Aufzeichnungsfeldes 1 verteilt. Die Anzahl der gesetzten Schreibpunkte 3 entspricht der Anzahl der Schreibpunkte 3′ in Fig. 2, so daß sich eine gleiche prozentuale Flächendeckung ergibt. Durch eine derartige stochastische Verteilung der Schreibpunkte 3 werden Rosetten und anderes Moiré zwar vermieden, jedoch können insbesondere im Mittelton-Bereich Körnigkeiten und Unruhe im Bild auftreten, wenn es - unregelmäßig verteilt - an vielen Stellen zu einem Punktschluß zwischen mehreren Punkten kommt. Als Folge des zufälligen Setzens der Schreibpunkte können, auch in Gebieten mit gleichem Tonwert, Anhäufungen von Punkten und Gebiete mit unterdurchschnittlicher Punktzahl auftreten und zu dunkleren Stellen bzw. Aufhellungen (Flecken und Wolkenbildung) führen.

Zur Vermeidung derartiger bildfremder Strukturen wird nach dem erfindungsgemäßen Verfahren das Aufzeichnungsfeld 1 in rechteckige, insbesondere quadratische Kacheln 5 mit einer bestimmten Zahl von Aufzeichnungselementen 4 aufgeteilt. Wie sich aus den Fig. 4 bis 11 ergibt, weisen die Kacheln 5 dabei bspw. 4 x 4 = 16 oder 6 x 6 = 36 Aufzeichnungselemente 4 auf. Vorzugsweise entspricht dabei die Fläche der Kacheln 5 der Fläche der jeweiligen Abtastelemente, so daß der Tonwert jeder Farbe in jeder Kachel 5 konstant ist und die Abtastauflösung erhalten bleibt.

Den einzelnen, in der Kachel 5 wiedergebbaren Flächendeckungsstufen werden festgelegte Punktverteilungen zugeordnet, welche als Bitmaps gespeichert werden und für die Bearbeitung eines Aufzeichnungsfeldes 1 zur Verfügung stehen. Um eine gleichmäßige Wiedergabe der Bildvorlage möglichst ohne Körnigkeit und Unruhe zu ermöglichen, wird bei der Festlegung der Punktverteilungen von regelmäßigen Grundmustern für die Flächendeckung 50% ausgegangen (siehe Fig. 4 bis 11).

Alle weiteren mit der Kachel 5 darstellbaren Flächendeckungsstufen, d.h. Punktverteilungen werden durch Hinzufügen bzw. Hinwegnehmen von Schreibpunkten 3 aus dem jeweils ausgewählten Grundmuster bestimmt.

Zur Erreichung einer Flächendeckung unter 50% werden, mit dem Ziel die durch Punktschluß verursachte Körnigkeit weiter zu reduzieren, vorzugsweise zunächst einander berührende Schreibpunkte 3 weggenommen. Dabei und bei der Wegnahme weiterer Punkte ist jeweils durch Übereinanderlegen der so erzeugten Punktmuster mit den anderen für die gleiche Flächendeckungsstufe verwendeten Punktmustern zu überprüfen, ob die Vorgabe, wonach die einzelnen Muster verschieden sein sollen, möglichst weitgehend berücksichtigt ist. Bei dem Hinzufügen von Schreibpunkten zu den Grundmustern zur Erreichung von Flächendeckungen über 50% ist insbesondere darauf zu achten, daß die Verteilung der nicht mit Schreibpunkten belegten Aufzeichnungselemente 4 regelmäßig bleibt, um einer Unruhe in der Bildwiedergabe entgegenzuwirken.

Alternativ zu diesem Vorgehen können die hinzuzufügenden bzw. wegzunehmenden Schreibpunkte 3 durch Zufallsauswahl bestimmt werden.

Die Kriterien "Translationsverbot" und "Überdeckungsverhältnis möglichst 1" können wie folgt berücksichtigt werden:

Den in den Fig. 4 bis 8 dargestellten Grundpunktmuster-Varianten für 4x4-Kacheln entsprechen die Fig. 12, 17, 14, 20 und 24. Alle übrigen in den Fig. 12 bis 31 gezeigten Beispiele für Grundpunktmuster wurden aus diesen Mustern durch Drehung, Verschiebung (Translation) sowie durch Vergrößerung oder Spiegelung von 2x2-Teilkacheln abgeleitet. So wurden z.B. die Fig. 15, 16, 21, 23 und 29 jeweils durch Drehen der Grundpunktmuster Fig. 14, 17, 20, 22 und 28 um 90° erhalten (vgl. hierzu auch die Fig. 5 mit Fig. 9 und Fig. 6 mit Fig. 10). Das Grundpunktmuster der Fig. 25 ergibt sich aus dem der Fig. 24 durch Diagonalverschiebung um ein Aufzeichnungselement, die Fig. 26, 27 und 30 durch Horizontalverschiebung um je ein Aufzeichnungselement aus den Fig, 25, 26 und 28. Die Fig. 13 kann sowohl durch Drehung um 90° als auch durch Translation um ein Aufzeichnungselement aus Fig. 12 erhalten werden. Das gleiche gilt z.B. für Fig. 18 (aus Fig. 17 bzw. Fig. 16), (Fig. 19 aus Fig. 18 bzw. Fig. 17), Fig. 31 (aus Fig. 30 bzw. Fig. 29). Die Fig. 24 erhält man durch Vergrößerung einer 2x2-Teilkachel von Fig. 12; Fig. 28 entsprechend aus Fig. 16. Die Fig. 22 ergibt sich aus Fig. 21 durch Spiegelung der oberen linken und unteren rechten 2x2-Teilkachel.

Manche Grundpunktmuster von Fig. 12 bis 31 sind bereits bei bekannten jedoch anderen Verfahren verwendet worden. Dies gilt, wie oben erwähnt, z.B. für das Schachbrettmuster. Im Hinblick auf das Auflösungsvermögen ist jedoch auch die Größe der Kachel, für welche das Grundpunktmuster aufgestellt wird, von Bedeutung. Bei dem in der US-A-5 107 331 beschriebenen, bei den einzelnen Farbauszügen gegeneinander verschobenen Schachbrettmustern bestehen die gleich gefärbten Teilflächen des bei 50% Flächendeckung vorgegebenen Schachbretts aus 4x4 Punkten, in den Fig. 24 bis 27 nur aus 2x2, bei Fig. 12 nur aus einem Schreibpunkt.

Entscheidend für die mit dem erfindungsgemäßen Verfahren erzielten Vorteile ist die Art, wie die Grundpunktmuster unter Berücksichtigung der Kriterien "möglichst verschieden", "Translationsverbot" und "Überdeckungsverhältnis" kombiniert werden.

Aufgrund des Kriteriums "Translationsverbot" ist, wie erwähnt, eine Kombination von Grundpunktmustern auszuschließen, die sich nur durch eine Translation voneinander unterscheiden (auch dann, wenn sich die Translation aus einer Drehung ergeben hat). Für eine Kombination eignen sich bspw. die Grundpunktmuster der Fig. 12, 14, 15, 16, 17, 24, 28 und 29, welche sich durch Verwinkelung um 90° bzw. durch Unterschiede in den Mustern der 2x2-Teilkacheln bzw. durch Verschiebung eines Teils der 2x2-Kacheln voneinander abheben.

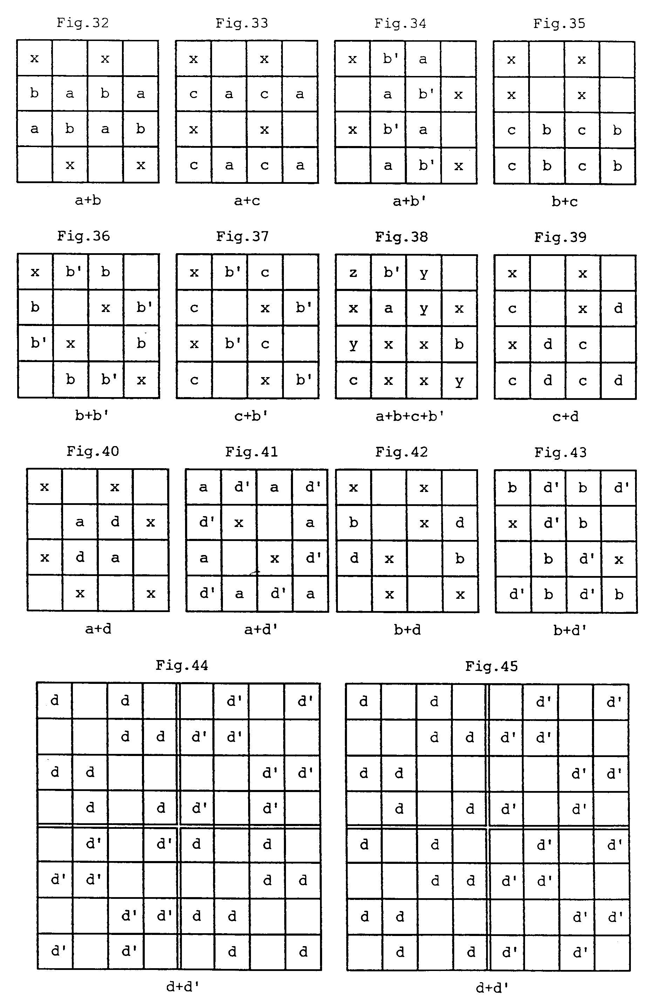

Was das Kriterium "Überdeckungsverhältnis möglichst 1" anbelangt, ergibt sich z.B. bei einer Kombination von vier Grundpunktmustern a, b, b′ und c, wie den Fig. 32 bis 37 zu entnehmen ist, bei paarweisem Übereinanderlegen jeweils bei 50% der Punkte eines Grundpunktmusters eine Überdeckung mit den Punkten des anderen Grundpunktmusters und bei dem Rest der Punkte keine. Das Kriterium "Überdeckungsverhältnis möglichst 1" ist somit bei sämtlichen genannten Kombinationen erfüllt (das gleiche gilt z.B. für Kombinationen der Grundpunktmuster a′, c′, c″, f oder a, b′, c‴, k′). Bei einem Übereinanderlegen aller vier Grundpunktmuster (bzw. Farbauszüge) treten, wie aus Fig. 38 zu entnehmen ist, folgende Varianten auf: 1 Aufzeichnungselement ohne Schreibpunkt, 4 mit nur einem, 6 mit Überdeckung von zwei Punkten, 4 mit drei Punkten und schließlich 1 Aufzeichnungselement mit Überdeckung von vier Punkten. Dazu kommt, daß es nicht nur die Extremsituationen des vollständigen Überdeckens bzw. überlappungsfreien Nebeneinanderliegens von Schreibpunkten gibt: Aufgrund des stets vorhandenen System-Rauschens werden nämlich die Schreibpunkte nicht immer dem Raster entsprechend genau auf die Aufzeichnungselemente gesetzt. Das führt zu einer von Ort zu Ort und Farbauszug zu Farbauszug schwankenden Überlappung der Schreibpunkte.

In den Fig. 40 bis 43 sind paarweise Kombinationen von Grundpunktmustern wiedergegeben, bei denen das Verhältnis ü/n der sich überdeckenden zu den sich nicht überdeckenden Schreibpunkten eines Grundmusters ungleich 1 ist (z.B. in Fig. 40 und 42: 6/2; in Fig. 41 und 43: 2/6). In den Fällen, in denen ü/n = n′/ü′ ist, kann der Forderung "Überdeckungsverhältnis möglichst 1" dadurch entsprochen werden, daß man bei der Abarbeitung der Kacheln innerhalb der Aufzeichnungsfelder die Kombinationen abwechselnd verwendet. Das Abwechseln kann dabei in bestimmter oder zufälliger Reihenfolge (Fig. 44 und 45) geschehen.

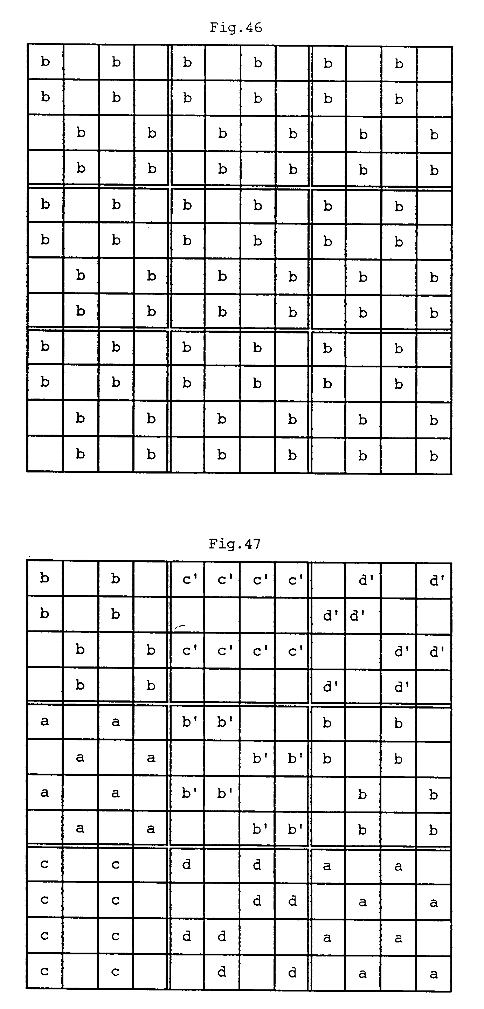

Das Kriterium "möglichst verschiedene Grundpunktmuster" kann nicht nur dadurch erfüllt werden, daß für jeden Farbauszug ein eigenes Grundpunktmuster verwendet wird (Fig. 46), sondern auch in dem mehrere, verschiedene Grundpunktmuster in bestimmter oder zufälliger Reihenfolge für alle Farbauszüge benutzt werden (Fig. 47).

Eine ausreichende Vielfalt von "möglichst verschiedenen Grundpunktmustern" ergibt sich, wie gezeigt wurde, bereits bei der 4x4-Kachel. Wegen des schlechter werdenden Detail-Auflösungsvermögens ist es nicht zweckmäßig, mit größeren Kacheln zu arbeiten.

Andererseits wird, wie bereits erwähnt, die Tonwert-Auflösung - wegen der abnehmenden Zahl an realisierbaren Tonwert--Stufen - mit abnehmender Kachelgröße geringer. Dieser Nachteil kann leicht überwunden werden, indem die mögliche Abweichung des reproduzierten von dem vorgegebenen Tonwert bei der Bearbeitung anderer Kacheln berücksichtigt wird.

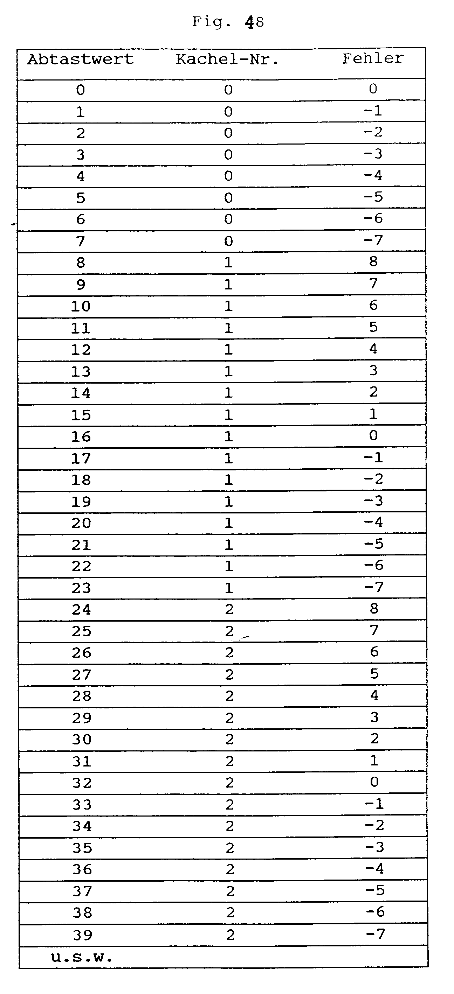

Bei den Fig. 4 bis 8 sind z.B. 17, bei den Fig. 9 bis 11 insgesamt 37 Tonwertstufen möglich. Abtastseitig werden jedoch bei 8 bit 256 Tonwertstufen differenziert. Entspricht daher der ermittelte Tonwert nicht zufällig einer in einer Kachel wiedergebbaren Tonwertstufe, so entsteht ein Fehler gegenüber dem Tonwert des zugehörigen Abtastelementes. Die Zuordnung von Kacheln und dabei entstehender Fehler zu den abtastseitigen Tonwertstufen läßt sich bekanntlich schnell und einfach über eine LOOK UP TABLE bewerkstelligen. Angenommen die Aufzeichnung erfolge in 4x4-Kacheln, so stehen aufzeichnungsseitig 17 Tonwertstufen innerhalb einer Kachel zur Verfügung, nämlich die Werte 0, 1, 2, 3,..., 15 und 16. Ordnet man in einer Tabelle in Spalte 1 den abgetasteten Tonwert, in Spalte 2 die zugeordnete Kachel und in Spalte 3 den durch die Zuordnung entstehenden Fehler an, so ergibt sich die in Fig. 48 in ihrem Beginn dargestellte Tabelle.

Die Berücksichtigung des Fehlers kann auf die unterschiedlichsten Arten erfolgen. Allgemein bekannt ist bei Geräten, welche nur eine begrenzte Zahl von Tonwertstufen erzeugen können (z.B. Computermonitore), Zwischenwerte durch Kombination von zwei oder mehreren Punkten benachbarter Tonwerte zu erzeugen (s Stoffel et al. a.a.O.). Hierzu kann z.B. das Verfahren der Errordiffusion Anwendung finden. Dieses ist bei sequentieller zeilenweiser Abarbeitung eines Bildes sehr verbreitet. Der bei dem Setzen eines Punktes (hier: Kacheln) entstehende Fehler wird auf die nächsten noch nicht bearbeiteten Aufzeichnungselemente (hier: Kachel) verteilt, d.h. von den dort gegebenen Tonwerten subtrahiert. Im Bereich der Ausgabe mit Geräten, die nur 2 Tonwerte erzeugen können, ist dieses Verfahren als FLOYD-STEINBERG-Algorithmus (s. Floyd et al., in SID Int. Sym. Digest of Tech. Papers, 1975, S. 36 bis 37) und Proc. SID, Vol. 17/2, 1976, S. 75 bis 77) allgemein bekannt und wegen seiner einfachen Implementierbarkeit gebräuchlich. Da dieses Verfahren infolge der sequentiellen Bildabarbeitung zu unerwünschten Strukturen führen kann, wird es vielfach abgewandelt (s. z.B. Peter Stucki, Bericht Nr. 92.03 des Instituts für Informatik der Universität Zürich, März 1992). Eine andere mögliche Berücksichtigung der Fehler kann z.B. dergestalt erfolgen, daß jeweils Felder von 2x2 der verwendeten Kacheln gemeinsam betrachtet werden, und zwischen diesen ein Fehlerausgleich derart vorgenommen wird, daß der Fehler in dem 2x2-Feld möglichst klein wird.

Mit dem erfindungsgemäßen Verfahren ergibt sich gegenüber der konventionellen (sog. autotypischen) Rasterung eine in ihrer Auflösung verbesserte Wiedergabe der Bildvorlage. Ferner wird eine Gefahr von Störeffekten durch Passerschwankungen und Interferenzen verringert sowie Punktschluß und Tonwertabriß vermieden. Im Vergleich zu der stochastischen Rasterung werden bei diesem Verfahren auftretende Störeffekte wie Körnigkeit, Unruhe, Flecken- und Wolkenbildung vermieden.

Bezugszeichenliste:

| | |
|---|---|
| 1, 1′ | Aufzeichnungsfeld |
| 2′ | Rasterpunkt |
| 3, 3′ | Schreibpunkte |
| 4, 4′ | Aufzeichnungselemente |
| 5 | Kachel |

Erläuterung der Figuren:

Aufzeichnungselement ohne
Schreibpunkt

o  oder  Aufzeichnungselement mit
Schreibpunkt

a bis k:  4x4 Kacheln mit
unterschiedlichen
Grundmustern

a  Aufzeichnungselement mit
Schreibpunkt in einer
Kachel mit Grundmuster a

*  bei Überlagerung von Kacheln mit verschiedenen Grundmustern
Aufzeichnungselement bei dem sich Schreibpunkte überdecken:
Überdeckung 2 Punkte * = x; 3 Punkte * = y; 4 Punkte * = z

**Patentansprüche**

1.  Verfahren zur elektronischen Verarbeitung mehrfarbiger Halbton-Bildvorlagen, bei welchem die in Form eines orthogonalen Rasters von flächenförmigen Abtastelementen unterteilte Bildvorlage zeilen- oder spaltenweise abgetastet wird, bei welchem die auf die jeweiligen Farbauszüge bezogene Helligkeit der einzelnen Abtastelemente ermittelt und in digitale Tonwerte konvertiert wird, bei welchem ein in Aufzeichnungsfelder (1) unterteiltes gerastertes Abbild der Bildvorlage durch eine dem jeweiligen Tonwert entsprechende Zahl von Schreibpunkten (3) gleicher Farbdichte wiedergegeben wird, welche auf einzelne flächenförmige Aufzeichnungselemente (4) des jeweiligen Aufzeichnungsfeldes (1) gesetzt werden, wobei jedes Aufzeichnungsfeld (1) in gleich große Kacheln (5) mit einer bestimmten Anzahl von Aufzeichnungselementen (4) aufgeteilt wird, wobei durch die Anzahl der in einer Kachel (5) enthaltenen Aufzeichnungselemente (4) die Zahl der innerhalb einer Kachel (5) differenzierbaren Tonwertstufen vorgegeben wird, wobei den einzelnen Tonwertstufen jeweils innerhalb der Kachel (5) bestimmte, vor Ablauf der Rasterung festgelegte und in einem Datenspeicher zur Verfügung gehaltene Verteilungen (Punktmuster) von den Tonwertstufen zahlenmäßig entsprechenden Schreibpunkten (3) zugeordnet werden, und wobei die bestimmten Punktmuster ausgehend von festgelegten, für einzelne Farbauszüge jeweils unterschiedlichen Grundpunktmustern durch Hinzufügen oder Wegnehmen von Schreibpunkten (3) erhalten werden, **dadurch gekennzeichnet,** daß die Grundpunktmuster für eine Flächendeckung von 50 % festgelegt werden und daß die für die einzelnen Farbauszüge verwendeten Grundpunktmuster der Kacheln von Farbauszug zu Farbauszug dadurch verschieden voneinander sind, daß sie nicht durch Translation um ein oder mehrere Aufzeichnungselemente ineinander überführt werden können, und daß bei jeweils paarweisem Aufeinanderlegen der Grundpunktmuster von verschiedenen Farbauszügen das Verhältnis der sich überdeckenden Schreibpunkte (ü) zu den sich nicht überdeckenden Schreibpunkten (n) gleich 1 ist bzw. möglichst nahe bei 1 liegt, oder daß bei einem Überdeckungsverhältnis von ü/n ≠ 1 abwechselnd Grundpunktmuster-Kombinationen ü, n und ü', n' verwendet werden, bei welchen n'/ü' = ü/n ist.

2.  Verfahren nach Anspruch 1, **dadurch gekennzeichnet,** daß Grundpunktmuster verwendet werden, welche durch Drehung um 90°, durch Vergrößerung von Teilkacheln, Verschiebung von Teilkacheln oder Spiegelung von Teilkacheln auseinander entstanden sind.

3.  Verfahren nach einem der Ansprüche 1 oder 2, **dadurch gekennzeichnet,** daß die Vorgabe, möglichst unterschiedliche Muster für die einzelnen Farbauszüge zu verwenden, auch dann berücksichtigt wird, wenn - zur Realisierung der Flächendeckungsstufen von mehr bzw. weniger als 50 % - Punkte zu den Grundpunktmustern hinzugefügt bzw. von ihnen weggenommen werden.

4.  Verfahren nach einem der Ansprüche 1 bis 3, **dadurch gekennzeichnet,** daß für einzelne oder alle Farbauszüge jeweils mehrere mögliche Grundpunktmuster verwendet werden, und daß die Grundpunktmuster bei der Abarbeitung der Kacheln innerhalb der Aufzeichnungsfelder in vorgegebener Reihenfolge oder durch Zufallsauswahl zugrundegelegt werden.

5.  Verfahren nach einem der Ansprüche 1 bis 4, **dadurch gekennzeichnet,** daß man Kacheln mit 4x4 Aufzeichnungselementen verwendet.

6. Verfahren nach einem der Ansprüche 1 bis 5, **dadurch gekennzeichnet,** daß der durch Verwenden einer den jeweiligen Tonwert möglichst, aber meistens nicht ganz genau wiedergebenden Kachel (5) entstehende Fehler bei der Bearbeitung anderer Kacheln (5) berücksichtigt wird.

## Claims

1. Process for electronic processing of multicolored continuous-tone images, during which process the original, divided in the shape of an orthogonal screen of areal scan elements, is scanned line by line or column by column; during which process the brightness of the individual scan elements is determined and converted into digital tone values, said brightness being based on the respective color separations; during which process a screened reproduction of the original that is divided into recording fields (1) is obtained by printing a number of dots (3), which correspond to the respective tone value, exhibit identical color density, and are set on the individual areal recording elements (4) of the respective recording field (1); during which process each recording field (1) is divided into tiles (5) of identical size with a specific number of recording elements (4); during which process the number of tone levels that can be differentiated within a tile (5) is specified by the number of recording elements (4) contained in a tile (5); during which process distributions (dot pattern) of the dots (3) corresponding numerically to the tone levels are assigned to the individual tone levels within the tile (5), said distributions being defined within the tile and determined prior to the completion of screening and held available in a data memory; and during which process the specific dot patterns are obtained, starting from fixed basic dot patterns that are different for individual color separations, by adding or subtracting dots (3), wherein basic dot patterns are determined for a dot area of 50% and wherein the basic dot patterns of the tiles that are used for the individual color separations are different from color separation to color separation, because they cannot be conveyed into each other through translation by one or more recording elements, and wherein when superimposing pairs of basic dot patterns of the different color separations, the ratio of the overlapping dots (ü) to the non-overlapping dots (n) is equal to 1 or as close to 1 as possible; or wherein for an overlapping ratio of $ü / n \neq 1$ basic dot pattern combinations ü, n and ü′, n′ are used alternatingly, where $n′/ü′ = ü/n$.

2. Process, as claimed in claim 1, wherein basic dot patterns are used that are generated from another basic dot pattern by rotating by 90°, by enlarging the subtiles, shifting apart subtiles or reflecting subtiles.

3. Process, as claimed in claim 1 or 2, wherein the standard to use patterns that are as different as possible is taken into consideration even when -- to realize dot area lavels of more or less than 50% -- dots are added to or subtracted from the basic dot patterns.

4. Process, as claimed in any one of the claims 1 to 3, wherein several possible basic dot patterns are used for individual or all color separations, and wherein the basic dot pattern are the basis for processing tiles within the recording fields in predetermined sequence or by random choice.

5. Process, as claimed in any one of the claims 1 to 4, wherein tiles with 4x4 recording elements are used.

6. Process, as claimed in any one of the claims 1 to 5, wherein the error resulting from the use of a tile (5) that can almost exactly reproduce the respective tone value but usually not totally is taken into consideration when processing other tiles (5).

## Revendications

1. Procédé de traitement électronique d'originaux en couleurs à tons continus, dans lequel l'original, divisé en forme de réseau orthogonal d'éléments d'exploration en forme de surface, est exploré ligne par ligne ou colonne par colonne, la luminosité des différents éléments d'exploration relative aux différentes sélections de couleur est déterminée et convertie en tons numériques, une image tramée de l'original divisée en plages d'enregistrement (1) est reproduite par un nombre correspondant au ton de points d'écriture (3) de même densité optique qui sont mis sur différents éléments d'enregistrement en forme de surface (4) de la plage d'enregistrement (1), chaque plage d'enregistrement (1) étant divisée en carreaux de même grandeur (5) contenant un nombre déterminé d'éléments d'enregistrement (4), le nombre d'éléments d'enregistrement (4) contenus dans un carreau (5) fixant le nombre d'échelons de ton différenciables à l'intérieur d'un carreau (5), aux différents échelons de ton correspondant, à l'intérieur du carreau (5), des distributions déterminées (motifs de points) de points d'écriture (3) en nombre correspondant aux échelons de ton fixées avant le déroulement du tramage et tenues à disposition dans une mémoire de données, et les motifs de points déterminés étant obtenus à partir de motifs de points de base fixés et différents pour les différentes sélections de couleur par addition ou enlèvement de points d'écriture (3), caractérisé par le fait que les motifs de points de base sont fixés pour une couverture de surface de 50 % et que les motifs de points de base des carreaux utilisés pour les différentes sélections de couleur diffèrent les uns des autres d'une sélection de couleur à l'autre en ce qu'ils ne peuvent pas être transformés les uns en les autres par translation d'un ou de plusieurs éléments d'enregistrement, et qu'en cas de superposition par paires des motifs de points de base de différentes sélections de couleur, le rapport des points d'écriture se recouvrant (ü) aux points d'écriture ne se recouvrant pas (n) est égal à 1 ou aussi voisin que possible de 1, ou que dans le cas d'un rapport de recouvrement ü/n différent de 1, il est utilisé alternativement des combinaisons de motifs de points de base ü, n et ü', n' pour lesquelles n'/ü' = ü/n.

2. Procédé selon la revendication 1, caractérisé par le fait qu'il est utilisé des motifs de points de base qui se déduisent les uns des autres par rotation de 90°, par agrandissement de carreaux partiels, translation de carreaux partiels ou retournement de carreaux partiels.

3. Procédé selon l'une des revendications 1 et 2, caractérisé par le fait que l'exigence d'utilisation de motifs aussi différents que possible pour les différentes sélections de couleur est aussi prise en considération lorsque, pour la réalisation des échelons de couverture de surface de plus ou moins de 50 %, des points sont ajoutés aux motifs de points de base ou en sont enlevés.

4. Procédé selon l'une des revendications 1 à 3, caractérisé par le fait que pour certaines sélections de couleur ou pour toutes sont utilisés plusieurs motifs de points de base possibles, et que les motifs de points de base sont pris comme base l'élaboration des carreaux à l'intérieur des plages d'enregistrement dans un ordre fixé ou par choix au hasard.

5. Procédé selon l'une des revendications 1 à 4, caractérisé par le fait que l'on utilise des carreaux à 4 x 4 éléments d'enregistrement.

6. Procédé selon l'une des revendications 1 à 5, caractérisé par le fait que l'erreur résultant de l'utilisation d'un carreau (5) reproduisant aussi exactement que possible, mais généralement pas tout à fait exactement, le ton est prise en considération lors du traitement d'autres carreaux (5).

Photomultiplier

A/D-Wandler

R

G

B

Umfeld

R

G

B

Umfeld

Farbrechner

RGB,Umfeld -> YMCK

Optik

Lampe

Vorlage

Trommel

Bild mit max.
256 Stufen
(8-bit)

Plattenspeicher

R A S T E R - G E N E R A T O R

Datenvorbehandlung

Datenkonvertierung
(Rasterung)

Datenformatierung

Plattenspeicher

Fig. 1

Schreibkopf
für z.B. sechs
Schreibpunkte

1

6

Trommel

Film

FIG.2

FIG.3

FIG.4

FIG.5

FIG.6

FIG.7

FIG.8

FIG.9

FIG.10

FIG.11

Fig.12 (≡Fig.4)

Fig.13

Fig.14 (≡Fig.6)

Fig.15

a

a'

b

b'

Fig.16

Fig.17 (≡Fig.5)

Fig.18

Fig.19

c

c'

c''

c'''

Fig.20 (≡Fig.7)

Fig.21

Fig.22

Fig.23

d

d'

e

e'

Fig.24 (≡Fig.8)

Fig.25

Fig.26

Fig.27

f

g

h

i

Fig.28

Fig.29

Fig.30

Fig.31

j

j'

k

k'

Fig.32

Fig.33

Fig.34

Fig.35

a+b

a+c

a+b'

b+c

Fig.36

Fig.37

Fig.38

Fig.39

b+b'

c+b'

a+b+c+b'

c+d

Fig.40

Fig.41

Fig.42

Fig.43

a+d

a+d'

b+d

b+d'

Fig.44

Fig.45

d+d'

d+d'

Fig.46

| b |  | b |  | b |  | b |  | b |  | b |  |
|---|---|---|---|---|---|---|---|---|---|---|---|
| b |  | b |  | b |  | b |  | b |  | b |  |
|  | b |  | b |  | b |  | b |  | b |  | b |
|  | b |  | b |  | b |  | b |  | b |  | b |
| b |  | b |  | b |  | b |  | b |  | b |  |
| b |  | b |  | b |  | b |  | b |  | b |  |
|  | b |  | b |  | b |  | b |  | b |  | b |
|  | b |  | b |  | b |  | b |  | b |  | b |
| b |  | b |  | b |  | b |  | b |  | b |  |
| b |  | b |  | b |  | b |  | b |  | b |  |
|  | b |  | b |  | b |  | b |  | b |  | b |
|  | b |  | b |  | b |  | b |  | b |  | b |

Fig.47

| b |  | b |  | c' | c' | c' | c' |  | d' |  | d' |
|---|---|---|---|---|---|---|---|---|---|---|---|
| b |  | b |  |  |  |  |  | d' | d' |  |  |
|  | b |  | b | c' | c' | c' | c' |  |  | d' | d' |
|  | b |  | b |  |  |  |  | d' |  | d' |  |
| a |  | a |  | b' | b' |  |  | b |  | b |  |
|  | a |  | a |  |  | b' | b' | b |  | b |  |
| a |  | a |  | b' | b' |  |  |  | b |  | b |
|  | a |  | a |  |  | b' | b' |  | b |  | b |
| c |  | c |  | d |  | d |  | a |  | a |  |
| c |  | c |  |  | d | d |  |  | a |  | a |
| c |  | c |  | d | d |  |  | a |  | a |  |
| c |  | c |  |  | d |  | d |  | a |  | a |

Fig. 48

| Abtastwert | Kachel-Nr. | Fehler |
|:---:|:---:|:---:|
| 0 | 0 | 0 |
| 1 | 0 | -1 |
| 2 | 0 | -2 |
| 3 | 0 | -3 |
| 4 | 0 | -4 |
| 5 | 0 | -5 |
| 6 | 0 | -6 |
| 7 | 0 | -7 |
| 8 | 1 | 8 |
| 9 | 1 | 7 |
| 10 | 1 | 6 |
| 11 | 1 | 5 |
| 12 | 1 | 4 |
| 13 | 1 | 3 |
| 14 | 1 | 2 |
| 15 | 1 | 1 |
| 16 | 1 | 0 |
| 17 | 1 | -1 |
| 18 | 1 | -2 |
| 19 | 1 | -3 |
| 20 | 1 | -4 |
| 21 | 1 | -5 |
| 22 | 1 | -6 |
| 23 | 1 | -7 |
| 24 | 2 | 8 |
| 25 | 2 | 7 |
| 26 | 2 | 6 |
| 27 | 2 | 5 |
| 28 | 2 | 4 |
| 29 | 2 | 3 |
| 30 | 2 | 2 |
| 31 | 2 | 1 |
| 32 | 2 | 0 |
| 33 | 2 | -1 |
| 34 | 2 | -2 |
| 35 | 2 | -3 |
| 36 | 2 | -4 |
| 37 | 2 | -5 |
| 38 | 2 | -6 |
| 39 | 2 | -7 |
| u.s.w. | | |